# EUROPÄISCHE PATENTSCHRIFT

(11) **EP 4 423 356 B1**
(45) Veröffentlichungstag und Bekanntmachung des Hinweises auf die Patenterteilung: **02.07.2025**
(21) Anmeldenummer: 22823451.4
(22) Anmeldetag: 30.11.2022
(51) Int. Cl.: E05F 11/48, B60J 5/04, E05F 15/689, F16B 35/04

(54) **TÜRMODUL UND GEHÄUSEBAUGRUPPE EINES FAHRZEUGFENSTERHEBERS**
DOOR MODULE AND HOUSING ASSEMBLY OF A VEHICLE WINDOW LIFTER
MODULE DE PORTIÈRE ET ENSEMBLE BOÎTIER D'UN LÈVE-VITRE DE VÉHICULE

(30) Priorität: 01.12.2021 DE 102021213597
(43) Veröffentlichungstag der Anmeldung: 04.09.2024
(73) Patentinhaber: Brose Fahrzeugteile SE & Co. Kommanditgesellschaft, Bamberg, 96052 Bamberg (DE)
(72) Erfinder: HOFMANN, Dominik, 96148 Baunach (DE); HERZOG, Peter, 96129 Strullendorf (DE)
(74) Vertreter: FDST Patentanwälte
(86) Internationale Anmeldenummer: PCT/EP2022/083806
(87) Internationale Veröffentlichungsnummer: WO 2023/099542

(56) Entgegenhaltungen:
- DE-A1- 102010 052 095
- DE-B4- 102016 212 041

## Beschreibung

Die Erfindung betrifft eine Gehäusebaugruppe für ein Türmodul einer Fahrzeugtür eines Kraftfahrzeugs, gemäß dem Oberbegriff des Anspruchs 1. Eine derartige Gehäusebaugruppe ist beispielsweise aus der DE 10 2016 212 041 B4 bekannt. Sie betrifft weiter ein Türmodul mit einer solchen Gehäusebaugruppe.

Eine Fahrzeugtür eines Kraftfahrzeugs weist in der Regel einen häufig als Türrohbau bezeichneten Türrahmen und ein die Türaußenhaut der Fahrzeugtür bildendes Türaußenblech sowie ein mit dem Türrahmen verbundenes, fahrzeuginnenseitiges Türinnenblech oder eine Türinnenverkleidung auf. Zwischen der Türaußenhaut (dem Türaußenblech) und der Türinnenverkleidung ist ein Hohlraum als Montageraum für Funktionselemente oder Funktionskomponenten der Fahrzeugtür ausgebildet.

Die Funktionskomponenten einer Fahrzeugtür, beispielsweise ein Fensterheber bzw. eine Fensterheberbaugruppe, einen Drucksensor für einen Seitenairbag, eine Türsteuerelektronik, ein Lautsprecher, ein Türschloss, Bedieneinheiten oder dergleichen, sind in der Regel auf einer Trägerplatte eines auch als Aggregatträger bezeichneten Türmoduls vormontiert. Die bestückte Trägerplatte ist anschließend am Türrohbau unter Abdeckung einer auch als Montageöffnung dienenden Ausfachung des Türrahmens befestigt. Das Türmodul als insbesondere mit dem Fensterheber (der Fensterheberbaugruppe) bestückte Trägerplatte dient insbesondere auch zur Trennung eines zwischen der Türaußenhaut (dem Türaußenblech) und dem Türmodul gebildeten Nassraums von einem zwischen dem Türmodul und der Türinnenverkleidung (dem Türinnenblech) gebildeten Trockenraum der Fahrzeugtür.

Ein solcher Fensterheber für eine Fahrzeugtür ist beispielsweise mit einem Seilsystem zum Anheben und zum Absenken einer (Fenster-)Scheibe ausgeführt. Dabei können einstrangige Fensterheber mit nur einer Führungsschiene (Einstranganwendung) oder zweistrangige Fensterheber mit zwei parallelen Führungsschienen (Doppelstranganwendung) eingesetzt werden. Ein derartiger, auch als Seilfensterheber bezeichneter Fensterheber weist mindestens einen sogenannten Schienengleiter oder (Scheiben-)Mitnehmer auf, der mit der (Fenster-)Scheibe verbunden und mittels eines angetriebenen Seilsystem entlang der mindestens einer Führungsschiene geführt ist. Das Seilsystem des Fensterhebers weist in der Regel einen aus mindestens einem Zugseil gebildeten Seilzug auf, der einerseits eine Seiltrommel mit typischerweise mehreren Wicklungen umschlingt und von dieser auf- und abgewickelt wird, und der andererseits unter mehrfacher Umlenkung an den oder jeden (Scheiben-)Mitnehmer oder Schienengleiter geführt und dort fixiert ist.

Als Fensterheber- oder Seilantrieb ist typischerweise ein Elektromotor mit angekoppeltem Getriebe, insbesondere einem Schneckengetriebe als 90°-Umlenkgetriebe, vorgesehen. In der Einstranganwendung ist der Seilantrieb zur einzelnen Führungsschien beabstandet an der Trägerplatte des Türmoduls montieret, während in der Doppelstranganwendung mit zwei parallelen Führungsschienen der Seilantrieb typischerweise zwischen den beiden Führungsschienen des Türmoduls angeordnet und an der Trägerplatte montiert ist.

Bei der Montage des Seilantriebs kann der Elektromotor auf der Nassraumseite (Nassraummotor) oder auf der Trockenraumseite (Trockenraummotor) angeordnet sein. Die Montage des Elektromotors mit angekoppeltem Getriebe kann mittels einer beispielsweise aus der eingangs genannten DE 10 2016 212 041 B4 bekannten Gehäusebaugruppe mit einem das mit dem Elektromotor gekoppelte Getriebe aufnehmenden Gehäuseteil und mit einem die mit dem Seilantrieb gekoppelte Seiltrommel aufnehmenden Gehäuseteil erfolgen. Die Verschraubung der Gehäuseteile der Gehäusebaugruppe kann über Durchtrittsöffnungen der Trägerplatte mittels Schraubelementen (Schrauben) erfolgen, wobei die Schraubenköpfe im nassraumseitigen Gehäuseteil und die Schraubgewinde im trockenraumseitigen Gehäuseteil vorgesehen oder in diese im Zuge der Verschraubung eingebracht sind.

Es kann ein erstes Gehäuseteil, welches die mit dem Seilantrieb gekoppelte Seiltrommel aufnimmt, auf der Nassraumseite anzuordnen sein, während dann ein zweites Gehäuseteil, welches das mit dem Elektromotor gekoppelte Getriebe aufnimmt, auf der Trockenraumseite der Trägerplatte angeordnet ist. Die Verschraubung der Gehäuseteile muss daher von der Nassraumseite her in Richtung des Trockenraums erfolgen, wodurch die Verschraubung der beiden Gehäuseteile bei einer beispielsweise reparaturbedingten Demontage des Elektromotors und/oder des Getriebes des Seilantriebs nicht mehr gelöst werden kann, da eine Zugänglichkeit der Schraubelemente oder Schrauben nicht mehr gegeben ist. Zudem verhindert das typischerweise selbsthemmende Getriebe des Seilantriebs bei defektem Elektromotor ein Verschieben bzw. Absenken der Fensterscheibe, um die mechanische Schnittstelle oder Verbindung der Fensterscheibe mit dem (Scheiben- )Mitnehmer oder Schienengleiter des Fensterhebers zu lösen und zur Demontage bzw. Reparatur des Elektromotors das Türmodul bzw. die Trägerplatte mit montiertem Fensterheber aus der Fahrzeugtür auszubauen.

Der Erfindung liegt die Aufgabe zugrunde, eine besonders geeignete Gehäusebaugruppe für einen elektromotorischen Seilantrieb eines Fensterhebers, insbesondere für ein Türmodul mit auf einer Trägerplatte montiertem Fensterheber für eine Fahrzeugtür, anzugeben. Dabei soll eine Verschraubung zweier Gehäuseteile der Gehäusebaugruppe eines elektromotorischen Seilantriebs des Fensterhebers von einer Trockenraumseite und/oder von einer Nassraumseite des Türmoduls gegeben sein. Insbesondere soll ein Lösen der Verschraubung, beispielsweise zu Demontage- bzw. Reparaturzecken des Seilantriebs, von der Trockenraumseite her ermöglicht sein. Des Weiteren soll ein Türmodul mit einer solchen Gehäusebaugruppe mit zwei miteinander verschraubbaren Gehäuseteilen eines Seilantriebs eines Fahrzeugfensterhebers angegeben werden.

Bezüglich der Gehäusebaugruppe wird die genannte Aufgabe mit den Merkmalen des Anspruchs 1 und hinsichtlich des Türmoduls mit den Merkmalen des Anspruchs 8 erfindungsgemäß gelöst. Vorteilhafte Ausgestaltungen und Weiterbildungen sind Gegenstand der Unteransprüche.

Das Türmodul, das für eine Fahrzeugtür eines Kraftfahrzeugs vorgesehen und insbesondere für eine Nassraum-Trockenraum-Trennung in der Fahrzeugtür eingerichtet ist, weist eine Trägerplatte für eine nachfolgend auch als Fensterheber oder Fensterhebersystem bezeichnete Fensterheberbaugruppe mit einem elektromotorischen Seilantrieb auf, der mit einer Seiltrommel für ein Zugseils gekoppelt ist, das mit einem schienenlos oder vorzugsweise entlang einer Führungsschiene schiebebeweglich geführten Scheibenmitnehmer oder Schienengleiter verbunden ist. Ein erstes Gehäuseteil mit einer Anzahl an Durchgangsöffnungen für Schraubelemente nimmt die Seiltrommel drehbeweglich auf. Ein dem Seilantrieb zugeordnetes zweites Gehäuseteil weist eine der Anzahl der Durchgangsöffnungen des ersten Gehäuseteils entsprechende Anzahl von Schraubdomen zur Aufnahme der Schraubelemente auf. Das zweite Gehäuseteil des Seilantriebs ist vorzugsweise ein Getriebegehäuse, an welches der Elektromotor, beispielsweise mittels einer Schraubbefestigung oder Verschraubung als mechanische Schnittstelle, angebunden ist.

Das erste Gehäuseteil wird nachfolgend auch als Seilantriebsgehäuse oder als (seil-)trommelseitiges Gehäuse(-teil) bezeichnet. Das zweite Gehäuseteil wird nachfolgend auch als Getriebegehäuse, als (Motor-)Antriebsgehäuse oder als antriebs- oder motorseitiges Gehäuse(-teil) bezeichnet.

Das erste Gehäuseteil (Seilantriebsgehäuse) und das zweite Gehäuseteil (Motorantriebs- oder Getriebegehäuse) bilden eine verschraubbare oder verschraubte Gehäusebaugruppe. Zweckmäßigerweise sind beide Gehäuseteile, insbesondere das motorseitige zweite Gehäuseteil, aus Kunststoff, beispielsweise als Spitzgussteil, gefertigt. Das seiltrommelseitige erste Gehäuseteil (Seilantriebsgehäuse) ist auf einer ersten Plattenseite der Trägerplatte angeordnet. Das motorseitige zweite Gehäuseteil (Motorantriebsgehäuse) ist auf einer der ersten Plattenseite gegenüberliegenden zweiten Plattenseite der Trägerplatte angeordnet. Vorzugsweise ist das seiltrommelseitige erste Gehäuseteil auf oder an der der zweiten Plattenseite entsprechenden Nassraumseite und das motorseitige zweite Gehäuseteil auf oder an der der ersten Plattenseite entsprechenden Trockenraumseite der Trägerplatte angeordnet.

Geeigneter Weise weist die Trägerplatte eine Anzahl an Durchstecköffnungen auf, die (einerseits) mit den Durchgangsöffnungen des die Seiltrommel aufnehmenden ersten Gehäuseteils und (andererseits) mit den Schraubdomen des motorseitigen zweiten Gehäuseteils fluchten.

Das jeweilige Schraubelement weist einen Schraubenkopf mit einer, vorzugsweise als Primärantrieb dienenden oder wirksamen, ersten Werkzeugaufnahme und einen Gewindeschaft mit einer Schaftspitze am (dem Schraubenkopf abgewandten) Schaftende auf. Das Gewinde kann metrisch oder andersartig vorgeformt sein. Vorteilhafterweise ist das Gewinde des jeweiligen Schraubelements selbstschneidend. An oder in der Schaftspitze, dies bedeutet an der Stirnseite des dem Schraubenkopf abgewandten Schaftendes, ist eine, vorzugsweise als Sekundärantrieb dienende oder wirksame, zweite Werkzeugaufnahme vorgesehen bzw. in die Schaftspitze eingebracht.

Geeigneter Weise ist die zweite Werkzeugaufnahme an der Schaftspitze des jeweiligen Schraubelementes als Innen- oder Außenmehrkant oder als Innenmehrrund, insbesondere als Innen- oder Außensechskant bzw. Innensechsrund, ausgebildet. Auch ein Gerad- oder Kreuzschlitz als zweite Werkzeugaufnahme kann ausreichend sein, wenn zum Lösen der Verschraubung typischerweise nur ein entsprechend geringes Drehmoment (Lösemoment) erforderlich ist. Bevorzugt weist die zweite Werkzeugaufnahme an der Schaftspitze des jeweiligen Schraubelementes einen Innendurchmesser von 3mm bis 5mm, vorzugsweise (3,5 ± 0,5) mm, insbesondere 3,5mm oder 4mm, auf. Zudem kann der Sekundärantrieb in eine zusätzlich angeformte (zylindrische) Schaftspitze (ohne Gewinde) eingebracht sein, beispielsweise auch mit einem dickeren Kerndurchmesser als derjenige des anschließenden Gewindes.

Die zweite Werkzeugaufnahme dient oder wirkt vorzugsweise als Sekundärantrieb, um das Schraubelement nicht nur vom Schraubenkopf, sondern auch von der gegenüberliegenden Schaftspitze her (mittels eines Werkzeugs) betätigen - also Lösen oder Verschrauben - zu können. Mit anderen Worten ist das jeweilige Schraubelement auf der zweiten Plattenseite zur Demontage des mit dem seiltrommelseitigen ersten Gehäuseteil verschraubten motorseitigen zweiten Gehäuseteils betätigbar, insbesondere lösbar. Dadurch ist die Verschraubung, insbesondere ein Lösen der Schraubverbindung, der Gehäusebaugruppe stets von der Trockenraumseite des Türmoduls her bzw. auf der Trockenraumseite zugänglich, insbesondere zur Demontage des Seilantriebs und/oder zur Reparatur des Elektromotors, beispielsweise dessen Motorelektronik.

In vorteilhafter Ausgestaltung weist das erste Gehäuseteil von den Durchgangsöffnungen für die Schraubelemente durchsetzte Steckzapfen auf. Zweckmäßigerweise weisen die Schraubdome des zweiten Gehäuseteils (eingezogene) Stecktaschen zur Aufnahme der korrespondierenden Steckzapfen des ersten Gehäuseteils auf. Dadurch ist es vorteilhaft ermöglicht, die beiden Gehäuseteile (zeitlich) vor deren Verschraubung bereits, insbesondere formschlüssig, zu fügen, was die Montage erleichtert und die Fehlersicherheit erhöht. Geeigneter Weise weist das erste Gehäuseteil drei im Bereich der Ecken eines Dreiecks angeordnete oder in Dreiecksanordnung positionierte Durchgangsöffnungen und/oder hohle Steckzapfen auf. Analog weist das zweite Gehäuseteil in gleicher Dreiecksanordnung positionierte Schraubdome auf. Auch können beispielsweise vier derartige Durchgangsöffnungen bzw. Schraubdome an den Gehäuseteilen vorgesehen sein.

Das Gewinde des Schraubelementes kann sich über den gesamten Gewinde- oder Schraubenschaft vom Schraubenkopf bis zur Schraubenspitze erstrecken. Bei dieser Gestaltung ist es zweckmäßig, wenn die lichte Weite (der Innendurchmesser) der Durchgangsöffnung des ersten, seiltrommelseitigen Gehäuseteils zumindest geringfügig größer ist als der Außendurchmesser des Gewindeschaftes, so dass ein Gewindeeinschneiden oder ein Gewindeeingriff in der Durchgangsöffnung vermieden ist und die beiden Gehäuseteile bestimmungsgemäß an- bzw. gegeneinander gezogen und zur Gehäusebaugruppe montiert werden können.

In einer geeigneten Ausgestaltung ist vorgesehen, dass der Gewindeschaft des jeweiligen Schraubelements einen an den Schraubenkopf anschießenden ersten Schaftabschnitt mit einem ersten Außen-, Kern- oder Schaftdurchmesser und einen in die Schaftspitze mündenden zweiten Schaftabschnitt mit einem zweiten Außen-, Kern oder Schraubdurchmesser aufweist. Vorzugsweise ist der (Außen- )Durchmesser des ersten Schaftabschnitt kleiner ist als der (Außen-)Durchmesser des zweiten Schaftabschnitts. Auf diese Weise kann das Schraubelement beim Lösen über die zweite Werkzeugaufnahme an der Schaftspitze des Schraubelementes in der zugeordneten Durchgangsöffnung bzw. im Steckzapfen des ersten Gehäuseteils verliersicher, beispielsweise formschlüssig oder klemmend, gehalten werden. Dadurch ist einerseits vermieden, dass das jeweilige Schraub(en)element beim Lösen in unerwünschter Weise in den nach Fertigstellung der Fahrzeugtür bzw. im Nachgang zur Montage des Türmoduls, beispielsweise im Rahmen von Demontage- oder Reparaturarbeiten des Antriebs oder des Elektromotors, in den nicht ohne Weiteres zugänglichen Nassraum hineinfällt. Auch kann im Nachgang zu einer Reparatur oder zu Zwecken eines Austausches des Seilantriebs bzw. dessen Elektromotors die erneute Verschraubung der beiden Gehäuseteile von der Trockenraumseite her vorgenommen werden, ohne das Türmodul (vollständig) zu demontieren.

Andererseits gelangt beim (erstmaligen) Verschrauben der beiden Gehäuseteile der erste Schaftabschnitt mit dem vergleichsweise kleinen Außen- oder Schaftdurchmesser im Zuge des Verschraubens in die Durchgangsöffnung bzw. in den Steckzapfen des ersten Gehäuseteils (Seilantriebsgehäuse), wobei dort kein Gewindeeingriff erfolgt und die beiden Gehäuseteile bestimmungsgemäß an- oder gegeneinander gezogen werden.

Die Gehäusebaugruppe, die insbesondere für ein Türmodul einer Fahrzeugtür eines Kraftfahrzeugs vorgesehen und eingerichtet ist, weist ein erstes und zweites Gehäuseteil auf, wobei das erste Gehäuseteil zur Aufnahme einer Seiltrommel eines Seilfensterhebers vorgesehenes und eingerichtet ist, während das zweite Gehäuseteil dem aus einem Elektromotor mit angekoppeltem Getriebe aufgebauten Seilantrieb zugeordnet ist. Das erste Gehäuseteil weist eine Anzahl an, vorzugsweise drei dreieckförmig angeordnete, Durchgangsöffnungen auf, mit denen jeweils ein Schraubdom des zweiten Gehäuseteils fluchtet. Die Schraubdome dienen zur Aufnahme und Verschraubung von über die Durchgangsöffnungen des ersten Gehäuseteils gesteckten Schraubelementen mit einem Gewindeschaft und mit jeweils einer Werkzeugaufnahme an beiden Schaftenden, insbesondere an einem Schraubenkopf und an einer Schaft- oder Schraubenspitze. Dadurch ist das jeweilige Schraubelement zu dessen Betätigung, insbesondere zum Verschrauben bzw. zum Lösen der Schraubverbindung, an beiden Schaftenden, insbesondere von der Rückseite sowohl des ersten Gehäuseteils als auch des zweiten Gehäuseteils, zugänglich.

Nachfolgend werden Ausführungsbeispiele der Erfindung anhand einer Zeichnung näher erläutert. Darin zeigen:
- Fig. 1: in schematischer Darstellung ein Türmodul mit einem (Fahrzeug- )Fensterheber (Seilfensterheber) mit an oder auf einer Trägerplatte einem Seilantrieb und einer Führungsschiene mit einem an eine Fensterscheibe koppelbaren (Scheiben-)Mitnehmer oder Schienengleiter mit Mitnehmerfunktion für die Fensterscheibe,
- Fig. 2a und 2b: in einer Explosionsdarstellung den Seilantrieb und die Trägerplatte des Türmoduls sowie eine Gehäusebaugruppe mit dem ersten Gehäuseteil (Seilantriebsgehäuse) und mit einem zweiten Gehäuseteil (Getriebegehäuse des Seilantriebs) mit Blick auf eine Trockenraum- bzw. Nassraumseite,
- Fig. 3: in einer Seitenansicht ein Schraubelement mit beidendseitig einer Werkzeugaufnahme (Primär- und Sekundärantrieb) zur Verschraubung der beiden Gehäuseteile und zum Lösen einer Verschraubung bzw. Schraubverbindung, und
- Fig. 4a und 4b: schematisch in einer Schnittdarstellung das über eine Durchgangsöffnung und/oder einen hohlen Steckzapfen des ersten Gehäuseteils in einen Schraubdom des zweiten Gehäuseteils eingeschraubte bzw. ausgeschraubte Schraubelement.

Einander entsprechende Teile und Größen sind in allen Figuren mit den gleichen Bezugszeichen versehen.

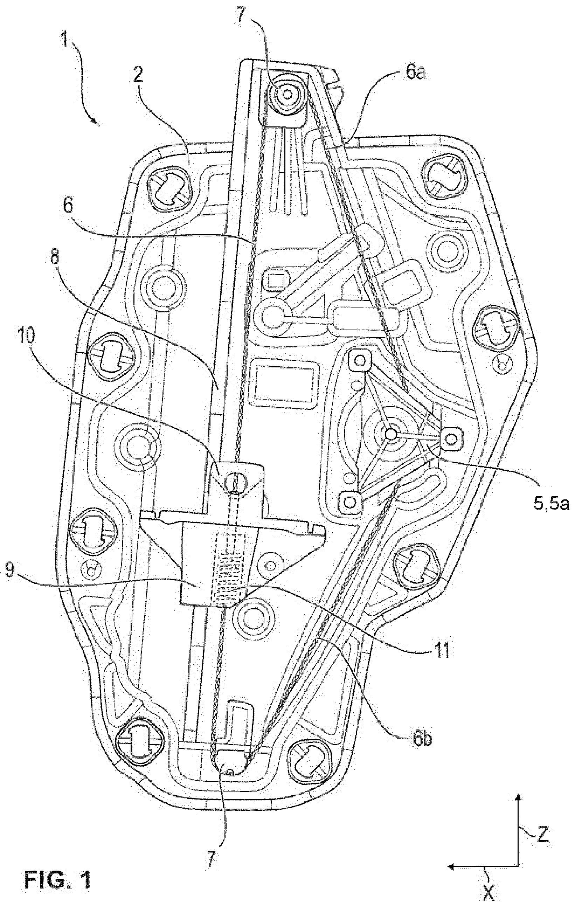

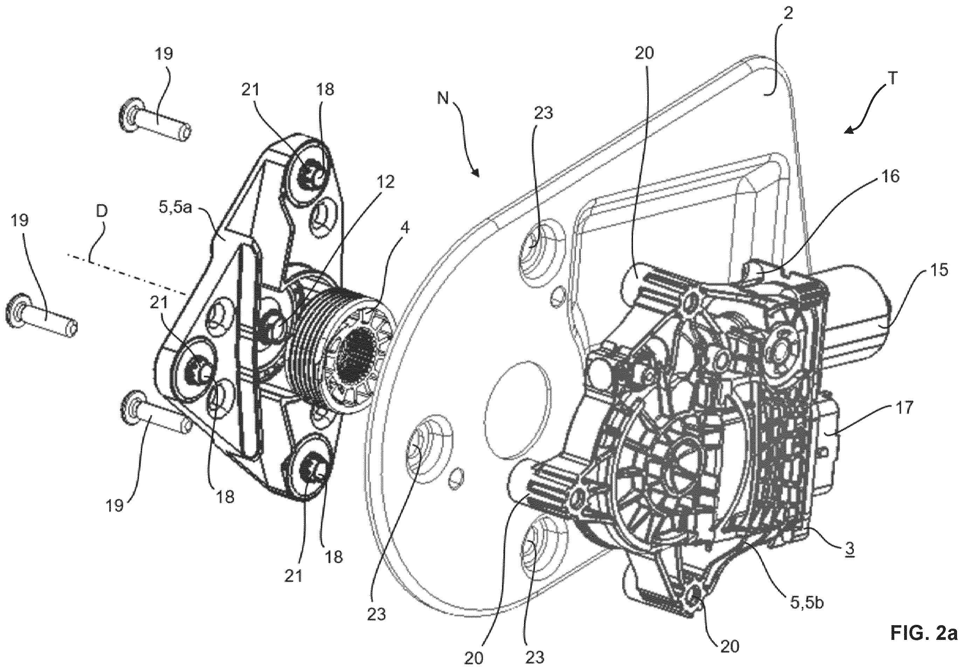

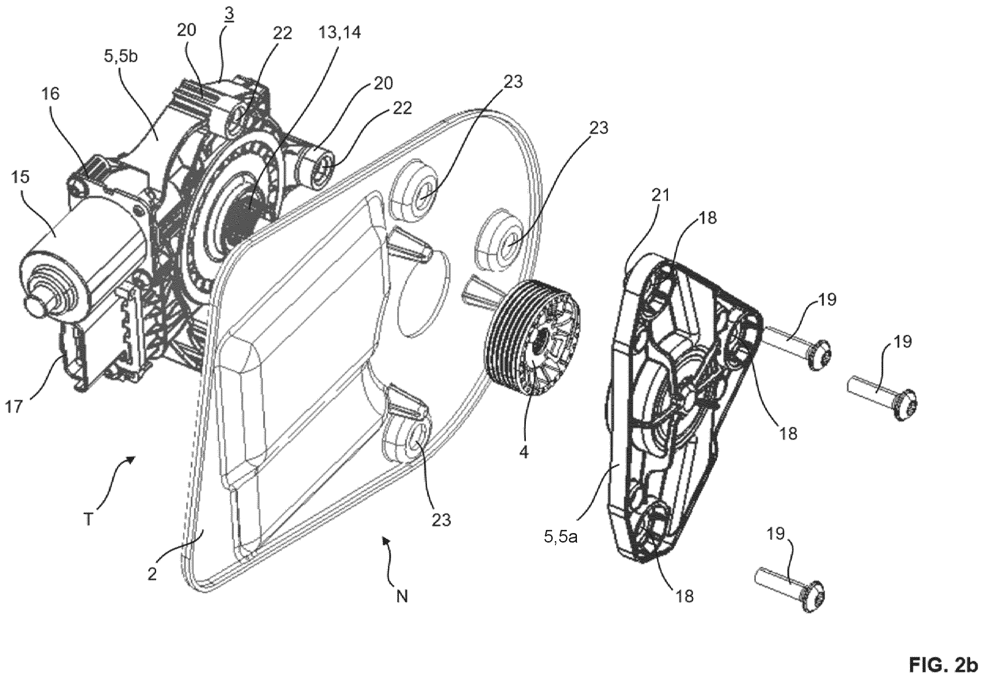

In den Fig. 1 ist ein Türmodul 1 mit einem auf einer Trägerplatte oder einem Funktionsträger 2 als Tragstruktur montierten, im Ausführungsbeispiel einstrangigen Fensterheber oder einer Fensterheberbaugruppe zur Montage in einer Fahrzeugtür eines Kraftfahrzeugs gezeigt. Der Fensterheber weist einen in den Figuren 2a und 2b gezeigten Seilantrieb 3 auf, der eine Seiltrommel 4 rotatorisch antreibt. Die Seiltrommel 4 ist in einem nachfolgend als Seilantriebsgehäuse bezeichneten ersten Gehäuseteil 5a einer Gehäusebaugruppe 5 angeordnet. Mittels der Seiltrommel 4 wird ein Zugseil 6 des Fensterhebers bewegt.

Die Seiltrommel 4 ist vom Zugseil 6 unter Bildung eines einlaufenden und eines auslaufenden Seilabschnitts 6a bzw. 6b umschlungen. Die Bezeichnung 6a, 6b des ein- und auslaufenden Seilabschnitts ist hier auf eine der beiden Drehrichtungen der Seiltrommel 4 bezogen. Zur Führung des Zugseils 6 sind beispielsweise als Seil- oder Umlenkrollen ausgeführte Umlenkelemente 7 vorgesehen, die an Schienenenden einer Schienenkontur der Trägerplatte 2 oder als auf der Trägerplatte 2 montierte Führungsschiene 8 angeordnet sind. An dieser Führungsschiene 8 ist ein mit einer Fensterscheibe verbundener oder verbindbarer (Scheiben-)Mitnehmer 9 des Fensterhebers oder ein Schienengleiter mit beispielsweise klemmbackenartiger Mitnehmerkontur 10 für die nicht dargestellte Fensterscheibe (Fahrzeugscheibe) in Z-Richtung verschiebbar angeordnet.

Die Angaben hinsichtlich der Raumrichtungen sind in einem Koordinatensystem des Kraftfahrzeugs (Fahrzeugkoordinatensystem) bezüglich der beispielhaften Einbausituation in einer Seitentür des Kraftfahrzeugs angegeben. Die Abszissenachse (X-Achse) ist hierbei entlang der Fahrzeuglängsrichtung (Fahrtrichtung) und die Ordinatenachse (Y-Achse) entlang der Fahrzeugquerrichtung sowie die Applikatenachse (Z-Achse) entlang der Fahrzeughöhe orientiert. Die Y-Achse verläuft in Fig. 1 normal (senkrecht) zur Zeichenebene. Bezogen auf das Fahrzeugkoordinatensystem liegt die Trägerplatte 2 in der XZ-Ebene, und die Drehachse D (Figu-ren 2a und 2b) der Seiltrommel 4 ist hierzu orthogonal in Y-Richtung orientiert. Nachfolgende Angaben zur Axialrichtung (axial) und Radialrichtung (radial) beziehen sich auf die in Y-Richtung orientierte Drehachse D der Seiltrommel 4.

Der Mitnehmer oder Schienengleiter 9 ist mit dem Zugseil 6 verbunden, so dass eine Bewegung des Zugseils 6 ein Verstellen des Schienengleiters (Mitnehmers) 9 entlang der Führungsschiene 8 bewirkt. Ferner hält der Mitnehmer 9 bzw. der Schienengleiter mittels dessen Mitnehmerkontur 10 die Fensterscheibe, welche beim Verstellen des Schienengleiters oder Mitnehmers 9 entsprechend mitgenommen und verfahren wird. Das Zugseil 6 ist über ein im Schienengleiter (Mitnehmer) 9 angeordnetes Federelement 11 mit dem Schienengleiter (Mitnehmer) 9 verbunden, um das Zugseil 6 mit einer bestimmten bzw. vorgegebenen Seilspannung zu spannen.

Der Fensterheber ist im Ausführungsbeispiel bowdenlos, es handelt sich hier also um einen Seilfensterheber mit offenem Seilsystem. Es kann jedoch auch ein Bowdenzugsystem vorgesehen sein. Auch kann der Fensterheber zweistrangig mit zwei auf der Trägerplatte 2 des Türmoduls 1 montierten oder in die Trägerplatte 2 integrierten, aus dem Kunststoffmaterial der Trägerplatte ausgeformten parallelen Führungsschienen 8 ausgeführt sein, wobei der Seilantrieb 3 hier vorzugsweise zwischen den Führungsschienen angeordnet bzw. auf der Trägerplatte 2 montiert ist.

Die Figuren 2a und 2b zeigen in Explosionsdarstellungen den Seilantrieb 3 und - ausschnittsweise bzw. schematisch reduziert - die Trägerplatte 2 des Türmoduls 1 sowie die Gehäusebaugruppe 5 mit dem ersten Gehäuseteil 5a und mit einem zweiten Gehäuseteil 5b, das nachfolgend auch als Getriebegehäuse bezeichnet wird.

Die Fig. 2a gewährt einen Blick in das Seilantriebsgehäuse als erstes Gehäuseteil 5a sowie auf eine einem Trockenraum T zugewandte oder in diesem befindliche erste Plattenseite der Trägerplatte 2 und auf die Rückseite des zweiten Gehäuseteils 5b des Seilantriebs 3. Die Fig. 2b gewährt einen Blick in oder auf das Getriebegehäuse als zweites Gehäuseteil 5b sowie auf eine einem Nassraum N zugewandte oder in diesem befindliche zweite Plattenseite der Trägerplatte 2 und auf die Rückseite des ersten Gehäuseteils 5a als Seilantriebsgehäuse.

In den Figuren 2a und 2b erkennbar ist die Seiltrommel 4, die (abtriebsseitig) auf einem Lagerzapfen 12 des Seilantriebsgehäuses als erstes Gehäuseteil 5a sitzt und dort um die Drehachse D drehbar gelagert angeordnet ist. Die Seiltrommel 4 ist (antriebsseitig) mit einem Antriebszapfen 13 gekoppelt, der seinerseits mit einem als 90°-Umlenkgetriebe in Form vorzugsweise eines Schneckengetriebes wirksamen Getriebe 14 gekoppelt ist. Das Getriebe 14, das Bestandteil des Seilantriebs 3 ist, ist mit einem Elektromotor 15 gekoppelt, der über eine Motor-Getriebe-Schnittstelle 16 an das Getriebegehäuse als zweites Gehäuseteil 5b montiert ist. Ein Steckanschluss 17 dient zur Bestromung einer Motorelektronik bzw. zur Ansteuerung des Elektromotors 15 des Seilantriebs 3.

Das erste Gehäuseteil (Seilantriebsgehäuse) 5a, welches die Seiltrommel 4 drehbeweglich aufnimmt, weist eine Anzahl von im Ausführungsbeispiel drei in einer Dreiecksanordnung positionierten Durchgangsöffnungen 18 für jeweils ein Schraubelement 19 auf. Die Durchgangsöffnungen 18 korrespondieren bzw. fluchten mit Schraubdomen 20 des zweiten Gehäuseteils (Getriebegehäuses) 5b, in welche Schraubdome 20 die Schraubelemente 19 eindrehbar (einschraubbar) sind. Das erste Gehäuseteil (Seilantriebsgehäuse) 5a und das zweite Gehäuseteil (Motorantriebs- oder Getriebegehäuse) 5b bilden die mittels der Schraubelemente 19 verschraubbare Gehäusebaugruppe 5. Beide Gehäuseteile 5a, 5b, insbesondere jedoch das motorseitige zweite Gehäuseteil 5b, sind aus Kunststoff hergestellt.

Das erste Gehäuseteil 5a weist von den Durchgangsöffnungen 18 der Schraubelemente durchsetzte Steckzapfen 21 auf. Die Schraubdome 20 des zweiten Gehäuseteils 5b weisen - in Längsrichtung der Schraub(en)elemente eingezogene - Stecktaschen 22 zur Aufnahme der korrespondierenden Steckzapfen 21 des ersten Gehäuseteils 5a auf. Dadurch ist es ermöglicht, die beiden Gehäuseteile 5a, 5b vor deren Verschraubung zuverlässig vorzugsweise formschlüssig zu fügen. Die Trägerplatte 2 weist mit den Durchgangsöffnungen 18 bzw. mit den hohlen Steckzapfen 21 des die Seiltrommel 4 aufnehmenden ersten Gehäuseteils 5a und mit den Schraubdomen 20 bzw. mit den Stecktaschen 22 des motorseitigen zweiten Gehäuseteils 5b fluchtende Durchstecköffnungen 23 zum Durchführen oder Durchstecken der Schraubelemente 19 auf.

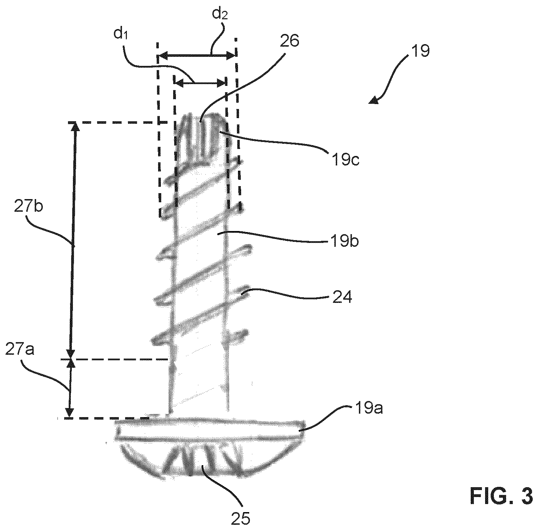

Fig. 3 zeigt das Schraubelement 19 mit einem selbstschneidenden Gewinde 24. Mit dieser Gewindeform schneidet sich das Schraubelement 19 selbsttätig in den jeweiligen Schraubdom 20 des zweiten, motor- oder antriebsseitigen Gehäuseteil 5b ein. Dabei werden das erste Gehäuseteil (Seilantriebsgehäuse) 5a und das zweite, motorseitige Gehäuseteil 5b - unter Zwischenlage der Trägerplatte 2 - gegeneinander gezogen und zur Gehäusebaugruppe 5 verschraubt.

Das Schraubelement 19 weist einen Schraubenkopf 19a mit einer nachfolgend auch als Primärantrieb bezeichneten ersten Werkzeugaufnahme 25 und einen Gewindeschaft 19b sowie eine Schaftspitze 19c am (dem Schraubenkopf abgewandten) Schaftende auf. An oder in der Schaftspitze 19c bzw. an der Stirnseite des dem Schraubenkopf 19a abgewandten Schaftendes ist eine zweiten Werkzeugaufnahme 26 als Sekundärantrieb in das Schraubelement 19 eingebracht. Diese zweite Werkzeugaufnahme 26 an oder in der Schaftspitze 19c des Schraubelementes 19 ist beispielsweise als Innensechskant oder als Innensechsrund (Torx), insbesondere mit einem Durchmesser (Innendurchmesser) von 3,5mm oder 4mm, ausgeführt. Über diese zweite Werkzeugaufnahme 26 kann das Schraubelement 19 von der Trockenraumseite T her mittels eines entsprechenden, kompatiblen Werkzeugs betätigt werden, so dass die Schraubverbindung (Verschraubung) der beiden Gehäuseteile 5a und 5b der Gehäusebaugruppe 5 des Seilantriebs 3 stets auf der oder von der Trockenraumseite T her gelöst werden kann.

Der Gewindeschaft 19b des Schraubelements 19 bzw. der Schaft des Schraubelementes 19 weist einen an den Schraubenkopf 19a anschließenden ersten Schaftabschnitt 27a mit einem ersten Außendurchmesser (Kern- oder Schaftdurchmesser) d₁ und einen in die Schaftspitze 19c mündenden zweiten Schaftabschnitt 27b mit einem zweiten Außendurchmesser (Kern- oder Schraubdurchmesser) d₂ auf. Der (Außen-)Durchmesser d₁ des ersten Schaftabschnitts 27a ist gegenüber oder im Vergleich zu dem (Außen-)Durchmesser d₂ des zweiten Schaftabschnitts 27b geringer, beispielsweise indem dieser erste Schaftabschnitts 27a gewindelos und/oder der Durchmesser des Schaftkerns dieses ersten Schaftabschnitts 27a kleiner ist als derjenige des zweiten Schaftabschnitts 27b.

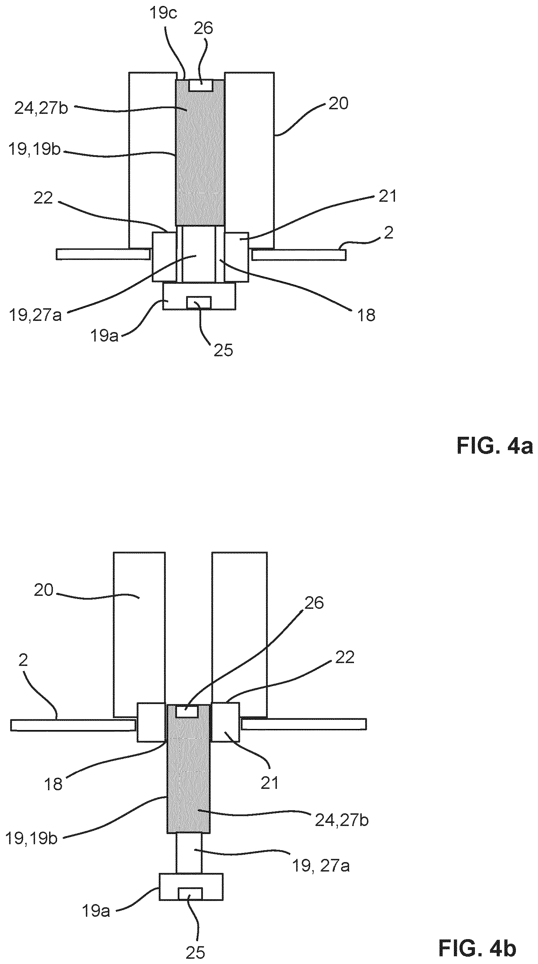

Fig. 4a zeigt ausschnittsweise schematisch bzw. im Schnitt die Schraubverbindung in einem der Schraubdome 20 des antriebs- oder motorseitigen zweiten Gehäuseteils 5b mit der Fügeverbindung des entsprechenden Steckzapfens 21 des seiltrommelseitigen ersten Gehäuseteils (Seilantriebsgehäuses) 5a mit oder in der Stecktasche 22 des entsprechenden Schraubdoms 20. Das Schraubelement 19 weist hier beispielhaft ein metrisches (Außen-)Gewinde 24 auf. Im Schraubdom 20 ist dann beispielsweise eine Schraubhülse mit einem zum (Außen-)Gewinde 24 des Schraubelementes 19 korrespondierenden Innengewinde angeordnet.

In der Schraubverbindung befindet sich der erste Schaftabschnitt 27a mit dem reduzierten oder verjüngten Außendurchmesser d₁ des Schraubelementes 19 im Bereich der Durchgangsöffnung 18 bzw. im Steckzapfen 21 des ersten, seiltrommelseitigen Gehäuseteils 5a. Dadurch, dass die lichte Weite bzw. der Innendurchmesser der Durchgangsöffnung 18 und/oder des Steckzapfens 21 größer ist als der (Außen-)Durchmesser dieses ersten Schaftabschnitts 27a des Schraubelementes 19 erfolgt im Bereich der Durchgangsöffnung 18 bzw. des Steckzapfens 21 des ersten, seiltrommelseitigen Gehäuseteils 5a keine Verschraubung, und die beiden Gehäuseteile 5a und 5b können im Zuge der Verschraubung gegeneinander gezogen bzw. verspannt werden.

Fig. 4b veranschaulicht den gelösten Zustand des Schraubelementes 19, indem dieses über den Sekundärantrieb, also die Werkzeugaufnahme an der Spitze 19c betätigt wird und aus dem Schraubdom 20 herausgedreht wird. Erkennbar verbleibt das Schraubelement 19 mit der Schaftspitze 19c in der Durchgangsöffnung 18 bzw. im Steckzapfen 21 des seiltrommelseitigen ersten Gehäuseteils (Seilantriebsgehäuse) 5a. Hierzu kann die Durchgangsöffnung 18 bzw. der Steckzapfen 21 einwärtsgerichtete Rippen oder Stege, beispielsweise als Formschlusselemente, aufweisen, um das Schraubelement 19 an oder in dieser Position in der Durchgangsöffnung 18 bzw. im Steckzapfen 21 des seiltrommelseitigen ersten Gehäuseteils (Seilantriebsgehäuse) 5a, insbesondere formschlüssig und/oder klemmend bzw. verliersicher, zu halten. Auf diese Weise kann im Nachgang zu einer Demontage und/oder Reparatur des trockenraumseitigen Seilantriebs 3 oder dessen Elektromotors 15 dieser erneut unter Herstellung der Verschraubung oder Schraubverbindung der beiden Gehäuseteile 5a und 5b auf oder von der Trockenraumseite T (her) montiert werden.

Beim Lösen des Schraubelementes 19 über die zweite Werkzeugaufnahme 26 an der Schaftspitze 19c des Schraubelementes 19 kann im Zuge des Ausgleitens des Schraubelementes 19 aus dem Schraubdom 20 auch die (formschlüssige) Verbindung des Steckzapfens 21 und des Schraubdoms 20 gelöst werden. Auch kann sich das Gewinde 24 über beide Schaftabschnitte 27a, 27b, also über den gesamten Gewinde- oder Schraubenschaft 19b erstrecken.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den in den beigefügten Ansprüchen definierten Gegenstand der Erfindung zu verlas**sen.**

### Bezugszeichenliste

- 1: Türmodul
- 2: Trägerplatte/Funktionsträger
- 3: Seilantrieb
- 4: Seiltrommel
- 5: Gehäusebaugruppe
- 5a: erstes Gehäusteil/Seilantriebsgehäuse
- 5b: zweites Gehäusteil/Getriebegehäuse
- 6: Zugseil
- 6a: ein- oder auslaufender Seilabschnitt
- 6b: aus- oder einlaufender Seilabschnitt
- 7: Umlenkelement
- 8: Schienenkontur/Führungsschiene
- 9: Mitnehmer/Schienengleiter
- 10: Mitnehmerkontur
- 11: Federelement
- 12: Lagerzapfen
- 13: Antriebszapfen
- 14: Getriebe
- 15: Elektromotor
- 16: Motor-Getriebe-Schnittstelle
- 17: Steckanschluss
- 18: Durchgangsöffnung
- 19: Schraubelement
- 19a: Schraubenkopf
- 19b: Gewindeschaft
- 19c: Schaftspitze
- 20: Schraubdom
- 21: Steckzapfen
- 22: Stecktaschen
- 23: Durchstecköffnung
- 24: Gewinde
- 25: Werkzeugaufnahme/Primärantrieb
- 26: Werkzeugaufnahme/Sekundärantrieb
- 27a: erster Schaftabschnitt
- 27b: zweiter Schaftabschnitt

- d_{1,2}: Außen-/Schraub-/Schaftdurchmesser
- D: Drehachse
- N: Nassraum
- T: Trockenraum

## Patentansprüche

1. Gehäusebaugruppe (5) für ein Türmodul (1) einer Fahrzeugtür eines Kraftfahrzeugs, aufweisend
- ein zur Aufnahme einer Seiltrommel (4) eines Seilfensterhebers vorgesehenes und eingerichtetes erstes Gehäuseteil (5a) mit einer Anzahl an Durchgangsöffnungen (18),
- ein einem Seilantrieb (3) zugeordnetes zweites Gehäuseteil (5b), das mit den Durchgangsöffnungen (18) des ersten Gehäuseteils (5b) korrespondierende Schraubdome (20) aufweist, und
- eine der Anzahl der Schraubdome (20) entsprechende Anzahl an Schraubelementen (19) mit einem Gewindeschaft (19b),
**dadurch gekennzeichnet,**
- **dass** das jeweilige Schraubelement (19) eine Werkzeugaufnahme (25, 26) an beiden Schaftenden aufweist, insbesondere das jeweilige Schraubelement (19) einen Schraubenkopf (19a) mit einer ersten Werkzeugaufnahme (25) und einen Gewindeschaft (19b) mit einer Schaftspitze (19c) sowie eine zweite Werkzeugaufnahme (26) an oder in der Schaftspitze (19c) aufweist, so dass das jeweilige Schraubelement (19) zu dessen Betätigung, insbesondere zum Verschrauben bzw. zum Lösen der Schraubverbindung, an beiden Schaftenden, insbesondere von der Rückseite sowohl des ersten Gehäuseteils (5a) als auch des zweiten Gehäuseteils (5b), zugänglich ist.

2. Gehäusebaugruppe (5) nach Anspruch 1,
**dadurch gekennzeichnet,**
- **dass** das erste Gehäuseteil (5a) von den Durchgangsöffnungen (18) für die Schraubelemente (20) durchsetzte Steckzapfen (21) aufweist, und/- oder
- **dass** das erste Gehäuseteil (5a) eine Anzahl von, vorzugsweise drei im Bereich der Ecken eines Dreiecks angeordnete oder in Dreiecksanordnung positionierte, Durchgangsöffnungen (18) und/oder Steckzapfen (21) aufweist.

3. Gehäusebaugruppe (5) nach Anspruch 1 oder 2,
**dadurch gekennzeichnet,**
- **dass** der jeweilige Schraubdom (20) des zweiten Gehäuseteils (5b) eine Stecktasche (22) zur Aufnahme eines korrespondierenden Steckzapfens (21) des ersten Gehäuseteils (5a) aufweisen, und/oder
- **dass** das zweite Gehäuseteil (5b) eine Anzahl von, vorzugsweise drei im Bereich der Ecken eines Dreiecks angeordnete oder in Dreiecksanordnung positionierte, Schraubdome (20) aufweist.

4. Gehäusebaugruppe (5) nach einem der Ansprüche 1 bis 3,
**dadurch gekennzeichnet,**
- **dass** das Gewinde (24) des jeweiligen Schraubelements (19) selbstschneidend oder metrisch ist, und/oder
- **dass** der Gewindeschaft (19b) des jeweiligen Schraubelements (19) einen an den Schraubenkopf (19a) anschießenden ersten Schaftabschnitt (27a) mit einem ersten Außen- oder Schaftdurchmesser (d₁) und einen in die Schaftspitze (19c) mündenden zweiten Schaftabschnitt (27b) mit einem zweiten Außen- oder Schraubdurchmesser (d₂) aufweist.

5. Gehäusebaugruppe (5) nach Anspruch 4,
**dadurch gekennzeichnet,**
**dass** der Außen- oder Schaftdurchmesser (d₁) des ersten Schaftabschnitt (27a) kleiner ist als der Außen- oder Schraubdurchmesser (d₂) des zweiten Schaftabschnitts (27b).

6. Gehäusebaugruppe (5) nach einem der Ansprüche 1 bis 5,
**dadurch gekennzeichnet,**
- **dass** die zweite Werkzeugaufnahme (26) an der Schaftspitze (19c) des jeweiligen Schraubelementes (19) als Innen- oder Außenmehrkant ausgebildet ist, und/oder
- **dass** die zweite Werkzeugaufnahme (26) an der Schaftspitze (19c) des jeweiligen Schraubelementes (19) einen Innendurchmesser von 3mm bis 5mm, vorzugsweise (3,5 ± 0,5) mm, aufweist.

7. Gehäusebaugruppe (5) nach einem der Ansprüche 1 bis 6,
**dadurch gekennzeichnet,**
**dass** beim Lösen des jeweiligen Schraubelementes (19) über die zweite Werkzeugaufnahme (26) an der Schaftspitze (19c) des Schraubelementes (19) eine Verbindung, insbesondere eine Formschlussverbindung, der oder an der jeweiligen Verschraubung gelöst und das Schraubelement (19) in der zugeordneten Durchgangsöffnung (19) bzw. im Steckzapfen (21) des ersten Gehäuseteils (5a) verliersicher gehalten ist.

8. Türmodul (1) für eine Fahrzeugtür eines Kraftfahrzeugs, aufweisend
- eine Trägerplatte (2) mit daran montiertem oder montierbarem Seilantrieb (3) eines Fensterhebers, wobei der Seilantrieb (3) mit einer Seiltrommel (4) für ein mit einem Scheibenmitnehmer (9) verbundenes oder verbindbares Zugseil (6) gekoppelt ist, und
- eine Gehäusebaugruppe (5) nach einem der Ansprüche 1 bis 7,
- wobei das die Seiltrommel (4) aufnehmende erste Gehäuseteil (5a) auf einer ersten Plattenseite (N) und das zweite Gehäuseteil (5b) auf einer gegenüberliegenden zweiten Plattenseite (T) der Trägerplatte (2) angeordnet ist, und
- wobei das jeweilige Schraubelement (19) auf der zweiten Plattenseite (T) zur Demontage des mit dem ersten Gehäuseteil (5a) verschraubten zweiten Gehäuseteils (5b) betätigbar, insbesondere lösbar, ist.

9. Türmodul (1) nach Anspruch 8,
**dadurch gekennzeichnet,**
**dass** die Trägerplatte (2) mit den Durchgangsöffnungen (18) des ersten Gehäuseteils (5a) und mit den Schraubdomen (20) des zweiten Gehäuseteils (5b) fluchtende Durchstecköffnungen (23) für die Schraubelemente (19) aufweist.

10. Türmodul (1) nach Anspruch 8 oder 9,
**dadurch gekennzeichnet,**
**dass** das die Seiltrommel (4) aufnehmende erste Gehäuseteil (5a) auf einer Nassraumseite (N) und das zweite Gehäuseteil (5b) auf einer Trockenraumseite (T) der Trägerplatte (2) angeordnet ist.

## Claims

1. Housing assembly (5) for a door module (1) of a vehicle door of a motor vehicle, including
- a first housing part (5a) which is provided and designed to accommodate a cable drum (4) of a cable window lifter and has a number of through-openings (18),
- a second housing part (5b) which is associated with a cable drive (3) and has screw bosses (20) which correspond to the through-openings (18) in the first housing part (5b), and
- a number of screw elements (19), which corresponds to the number of screw bosses (20), having a threaded shaft (19b),
**characterized**
- **in that** the respective screw element (19) has one tool receptacle (25, 26) at each shaft end, in particular the respective screw element (19) has a screw head (19a) with a first tool receptacle (25) and a threaded shaft (19b) with a shaft tip (19c), and a second tool receptacle (26) on or in the shaft tip (19c), and therefore the respective screw element (19) is accessible at both shaft ends, in particular from the rear face of the first housing part (5a) and of the second housing part (5b), in order to be actuated, in particular for screwing together or loosening the screw connection.

2. Housing assembly (5) according to Claim 1, **characterized**
- **in that** the first housing part (5a) has plug-in pins (21) which are penetrated by the through-openings (18) for the screw elements (20), and/or
- **in that** the first housing part (5a) has a number of, preferably three, through-openings (18) and/or plug-in pins (21) arranged in the region of the corners of a triangle or positioned in a triangular arrangement.

3. Housing assembly (5) according to Claim 1 or 2, **characterized**
- **in that** the respective screw boss (20) in the second housing part (5b) has an insertion pocket (22) for accommodating a corresponding plug-in pin (21) on the first housing part (5a), and/or
- **in that** the second housing part (5b) has a number of, preferably three, screw bosses (20) arranged in the region of the corners of a triangle or positioned in a triangular arrangement.

4. Housing assembly (5) according to one of Claims 1 to 3,
**characterized**
- **in that** the thread (24) of the respective screw element (19) is self-cutting or metric, and/or
- **in that** the threaded shaft (19b) of the respective screw element (19) has a first shaft portion (27a) which adjoins the screw head (19a) and has a first outer or shaft diameter (d₁), and a second shaft portion (27b) which leads into the shaft tip (19c) and has a second outer or screw diameter (d₂).

5. Housing assembly (5) according to Claim 4, **characterized**
**in that** the outer or shaft diameter (d₁) of the first shaft portion (27a) is smaller than the outer or screw diameter (d₂) of the second shaft portion (27b).

6. Housing assembly (5) according to one of Claims 1 to 5,
**characterized**
- **in that** the second tool receptacle (26) on the shaft tip (19c) of the respective screw element (19) is designed as an internal or external polygon, and/or
- **in that** the second tool receptacle (26) on the shaft tip (19c) of the respective screw element (19) has an inner diameter of 3 mm to 5 mm, preferably (3.5 ± 0.5) mm.

7. Housing assembly (5) according to one of Claims 1 to 6,
**characterized**
**in that** when the respective screw element (19) is loosened via the second tool receptacle (26) on the shaft tip (19c) of the screw element (19), a connection, in particular an interlocking connection, of the or on the respective screw connection is loosened and the screw element (19) is captively held in the associated through-opening (19) or in the plug-in pin (21) on the first housing part (5a).

8. Door module (1) for a vehicle door of a motor vehicle, including
- a support panel (2) having a cable drive (3) of a window lifter, which cable drive is mounted or can be mounted on the support panel, wherein the cable drive (3) is coupled to a cable drum (4) for a pull cable (6) which is connected or can be connected to a pane carrier (9), and
- a housing assembly (5) according to one of Claims 1 to 7,
- wherein the first housing part (5a), which accommodates the cable drum (4), is arranged on a first panel side (N) and the second housing part (5b) is arranged on an opposite, second panel side (T) of the support panel (2), and
- wherein the respective screw element (19) can be actuated, in particular loosened, on the second panel side (T) in order to uninstall the second housing part (5b), which is screwed together with the first housing part (5a).

9. Door module (1) according to Claim 8, **characterized**
**in that** the support panel (2) has plug-through openings (23) for the screw elements (19), which align with the through-openings (18) in the first housing part (5a) and with the screw bosses (20) in the second housing part (5b).

10. Door module (1) according to Claim 8 or 9, **characterized**
**in that** the first housing part (5a), which accommodates the cable drum (4), is arranged on a wet-chamber side (N) and the second housing part (5b) is arranged on a dry-chamber side (T) of the support panel (2).

## Revendications

1. Ensemble de boîtier (5) pour un module de porte (1) d'une porte de véhicule d'un véhicule automobile, présentant
- une première partie de boîtier (5a) prévue et adaptée pour recevoir un tambour de câble (4) d'un lève-vitre à câble, avec un nombre d'ouvertures de passage (18),
- une deuxième partie de boîtier (5b) associée à un entraînement par câble (3), qui présente des dômes à vis (20) correspondant aux ouvertures de passage (18) de la première partie de boîtier (5b), et
- un nombre d'éléments de vissage (19) avec une tige filetée (19b) correspondant au nombre de dômes à vis (20),
**caractérisé en ce que**
- l'élément de vissage respectif (19) présente un logement d'outil (25, 26) aux deux extrémités de la tige, notamment l'élément de vissage respectif (19) présente une tête de vis (19a) avec un premier logement d'outil (25) et une tige filetée (19b) avec une pointe de tige (19c) ainsi qu'un deuxième logement d'outil (26) sur ou dans la pointe de tige (19c), de telle sorte que l'élément de vissage respectif (19) est accessible pour son actionnement, notamment pour visser ou pour desserrer la liaison par vis, aux deux extrémités de la tige, notamment depuis le côté arrière aussi bien de la première partie de boîtier (5a) que de la deuxième partie de boîtier (5b).

2. Ensemble de boîtier (5) selon la revendication 1, **caractérisé en ce que**
- la première partie de boîtier (5a) présente des tenons d'enfichage (21) traversés par les ouvertures de passage (18) pour les éléments de vissage (20), et/ou
- la première partie de boîtier (5a) présente un nombre d'ouvertures de passage (18) et/ou de tenons d'enfichage (21), de préférence trois, agencés dans la zone des coins d'un triangle ou positionnés selon un agencement triangulaire.

3. Ensemble de boîtier (5) selon la revendication 1 ou 2,
**caractérisé en ce que**
- le dôme à vis (20) respectif de la deuxième partie de boîtier (5b) présente une poche d'enfichage (22) pour recevoir un tenon d'enfichage (21) correspondant de la première partie de boîtier (5a), et/ou
- la deuxième partie de boîtier (5b) présente un nombre de dômes à vis (20), de préférence trois, agencés dans la zone des coins d'un triangle ou positionnés selon un agencement triangulaire.

4. Ensemble de boîtier (5) selon l'une quelconque des revendications 1 à 3,
**caractérisé en ce que**
- le filetage (24) de l'élément de vissage respectif (19) est autotaraudeur ou métrique, et/ou
- la tige filetée (19b) de l'élément de vissage respectif (19) présente une première section de tige (27a) se raccordant à la tête de vis (19a) avec un premier diamètre extérieur ou de tige (d₁) et une deuxième section de tige (27b) débouchant dans la pointe de tige (19c) avec un deuxième diamètre extérieur ou de vis (d₂).

5. Ensemble de boîtier (5) selon la revendication 4, **caractérisé en ce que**
le diamètre extérieur ou de tige (d₁) de la première section de tige (27a) est plus petit que le diamètre extérieur ou de vis (d₂) de la deuxième section de tige (27b).

6. Ensemble de boîtier (5) selon l'une quelconque des revendications 1 à 5,
**caractérisé en ce que**
- le deuxième logement d'outil (26) est réalisé sur la pointe de tige (19c) de l'élément de vissage respectif (19) sous forme de polygone intérieur ou extérieur, et/ou
- le deuxième logement d'outil (26) présente, à la pointe de tige (19c) de l'élément de vissage respectif (19), un diamètre intérieur de 3 mm à 5 mm, de préférence de (3,5 ± 0,5) mm.

7. Ensemble de boîtier (5) selon l'une quelconque des revendications 1 à 6,
**caractérisé en ce que**
lors du desserrage de l'élément de vissage respectif (19) par l'intermédiaire du deuxième logement d'outil (26) sur la pointe de tige (19c) de l'élément de vissage (19), une liaison, notamment une liaison par complémentarité de forme, du ou sur le vissage respectif est desserrée et l'élément de vissage (19) est maintenu sans risque de perte dans l'ouverture de passage associée (19) ou dans le tenon d'enfichage (21) de la première partie de boîtier (5a).

8. Module de porte (1) pour une porte de véhicule d'un véhicule automobile, présentant
- une plaque de support (2) sur laquelle est monté ou peut être monté un entraînement par câble (3) d'un lève-vitre, l'entraînement par câble (3) étant couplé à un tambour de câble (4) pour un câble de traction (6) relié ou pouvant être relié à un entraîneur de vitre (9), et
- un ensemble de boîtier (5) selon l'une quelconque des revendications 1 à 7,
- la première partie de boîtier (5a) recevant le tambour de câble (4) étant agencée sur un premier côté de plaque (N) et la deuxième partie de boîtier (5b) étant agencée sur un deuxième côté de plaque (T) opposé de la plaque de support (2), et
- l'élément de vissage respectif (19) sur le deuxième côté de plaque (T) pouvant être actionné, notamment pouvant être desserré, pour le démontage de la deuxième partie de boîtier (5b) vissée à la première partie de boîtier (5a).

9. Module de porte (1) selon la revendication 8, **caractérisé en ce que**
la plaque de support (2) présente des ouvertures de passage (23) pour les éléments de vissage (19), qui sont alignées avec les ouvertures de passage (18) de la première partie de boîtier (5a) et avec les dômes à vis (20) de la deuxième partie de boîtier (5b).

10. Module de porte (1) selon la revendication 8 ou 9, **caractérisé en ce que**
la première partie de boîtier (5a) recevant le tambour de câble (4) est agencée sur un côté d'espace humide (N) et la deuxième partie de boîtier (5b) sur un côté d'espace sec (T) de la plaque de support (2).
